# FASCICULE DE BREVET EUROPEEN

(11) **EP 1 744 234 B1**
(45) Date de publication et mention de la délivrance du brevet: **24.09.2008**
(21) Numéro de dépôt: 06291126.8
(22) Date de dépôt: 07.07.2006
(51) Int. Cl.: G05D 23/19

(54) **Procédé de régulation de chauffage et appareil de chauffage comportant deux élements chauffants**
Verfahren zur Heizungsregelung und Heizungsvorrichtung mit zwei Heizelementen
Control method for heating and heating apparatus comprising two heating elements

(30) Priorité: 08.07.2005 FR 0507296
(43) Date de publication de la demande: 17.01.2007
(73) Titulaire: Atlantic Industrie, 85000 La Roche sur Yon (FR)
(72) Inventeur: Potier, Thierry, 85150 Saint Georges de Pointindoux (FR)
(74) Mandataire: Kaspar, Jean-Georges

(56) Documents cités:
- EP-A1- 0 455 509
- WO-A2-01/82018
- DE-A1- 2 606 296
- FR-A1- 2 801 115
- APPLIMO: "Soleidou - Ce radiateur révolutionne le chauffage électrique" 31 octobre 2003 (2003-10-31), pages 1-4, XP003008155 Paris, France

## Description

L'invention est relative à un procédé de régulation de chauffage d'un appareil comportant deux éléments chauffants.

L'invention est également relative à un dispositif de mise en oeuvre d'un procédé de régulation de chauffage selon l'invention.

Actuellement, la majorité des appareils de chauffage comporte un seul corps de chauffe dont la régulation est assurée par un thermostat électronique.

Un thermostat électronique permet à partir des valeurs de température ambiante et de température de consigne, et éventuellement de température extérieure, de faire fonctionner le corps de chauffe selon un taux de marche permettant de modifier la température ambiante de la pièce chauffée pour atteindre la température de consigne.

A cet effet, il est connu d'utiliser une loi de régulation proportionnelle intégrale utilisant la température ambiante, la température extérieure, et éventuellement la température ambiante corrigée en fonction de la température extérieure et l'écart calculé entre la température ambiante corrigée et la température de consigne, pour calculer le taux de marche du corps de chauffe.

Les régulations utilisant des lois de type connu permettent d'obtenir la température ambiante désirée, mais ne permettent pas d'obtenir la sensation de confort recherchée par l'utilisateur.

A cet effet, on a envisagé d'utiliser des appareils de chauffage comportant deux éléments chauffants : un élément chauffant à action dite « instantanée » et un élément chauffant à inertie. Cependant, bien qu'il soit possible dans ce cas d'obtenir une valeur plus uniforme de la température ambiante recherchée, la sensation de confort recherchée par l'utilisateur n'est pas obtenue.

**Un document publicitaire SOLEIDOU décrit un appareil de chauffage comportant deux éléments chauffants.**

Le document DE 2 606 296 décrit un procédé de réglage de conditions climatiques de type connu.

Un premier but de 1' invention est de fournir à l'utilisateur une sensation de confort lors du chauffage des pièces ou appartements.

Un deuxième but de l'invention est de fournir un nouveau procédé de régulation de chauffage d'un appareil comportant deux éléments chauffants : un élément chauffant à inertie, et un élément chauffant à action « instantanée ».

L'invention a pour objet un procédé de régulation d'un appareil de chauffage comportant un élément chauffant à action « instantanée » et un élément chauffant à inertie comportant les étapes de mesure de température ambiante, de calcul de l'écart entre la température de consigne et la température ambiante, de détermination d'un taux de marche global de l'appareil de chauffage, caractérisé par au moins une étape de comparaison du taux de marche global à au moins un seuil (X, Y) prédéterminé pour établir, d'une part, un taux de marche de l'élément chauffant à action « instantanée » et, d'autre part, un taux de marche de l'élément chauffant à inertie, pour effectuer une mise en marche uniquement de l'élément chauffant à action « instantanée » lorsque le taux de marche global de l'appareil est inférieur à un premier seuil (X) prédéterminé, et pour effectuer une mise en marche de l'élément chauffant à inertie à un taux de marche maximal et de l'élément chauffant à action « instantanée » à un taux de marche supérieur à une valeur (A) prédéterminée, lorsque le taux de marche global de l'appareil est supérieur à un deuxième seuil (Y) prédéterminé, de manière à établir une sensation de confort en obtenant un rayonnement de façade et une température de façade correspondants sur la façade de l'appareil de chauffage émettant un rayonnement vers l'utilisateur.

Selon d'autres caractéristiques alternatives de l'invention :
- le procédé de régulation d'un appareil de chauffage comporte une mise en marche de l'élément chauffant à action « instantanée » à un taux de marche pratiquement constant pour maintenir à une température de confort la façade de l'appareil de chauffage, et une mise en marche de l'élément chauffant à inertie à un taux de marche progressif, lorsque le taux de marche global de l'appareil est compris entre un premier seuil et un deuxième seuil prédéterminés,
- le procédé de régulation d'un appareil de chauffage comporte un établissement d'une correction tenant compte des taux de marche respectifs de l'élément chauffant à action « instantanée » et de l'élément chauffant à inertie pour corriger l'écart calculé entre la température de consigne et la température ambiante,
- ledit établissement d'une correction dudit écart calculé suit une loi de régulation proportionnelle intégrale,
- l'établissement des taux de marche de chaque élément chauffant est effectué en mode de fonctionnement dit « de confort » et en mode de fonctionnement dit « économique », de manière à maintenir la façade de l'appareil à une température adéquate et confortable pour l'utilisateur dans les deux modes de fonctionnement,
- la température de façade de l'appareil est voisine de 50°C en mode de fonctionnement dit « de confort » ou voisine de 35°C en mode de fonctionnement dit « économique »,
- la détermination d'une valeur prédéterminée de taux de marche de l'élément chauffant à action « instantanée » correspond à la température recherchée, pour établir une sensation de confort, de la façade de l'appareil.

L'invention a également pour objet un dispositif de mise en oeuvre du procédé selon l'invention comportant un thermostat, un élément chauffant à inertie et un élément chauffant à action « instantanée ».

L'invention sera mieux comprise grâce à la description qui va suivre donnée à titre d'exemple non limitatif en référence aux dessins annexés, dans lesquels :
- La figure 1 représente schématiquement, un organigramme des différentes étapes d'un procédé de régulation de chauffage selon l'invention.
- La figure 2 représente schématiquement, un organigramme fonctionnel d'un appareil de chauffage selon l'invention.
- La figure 3 représente schématiquement un diagramme explicatif de l'invention.

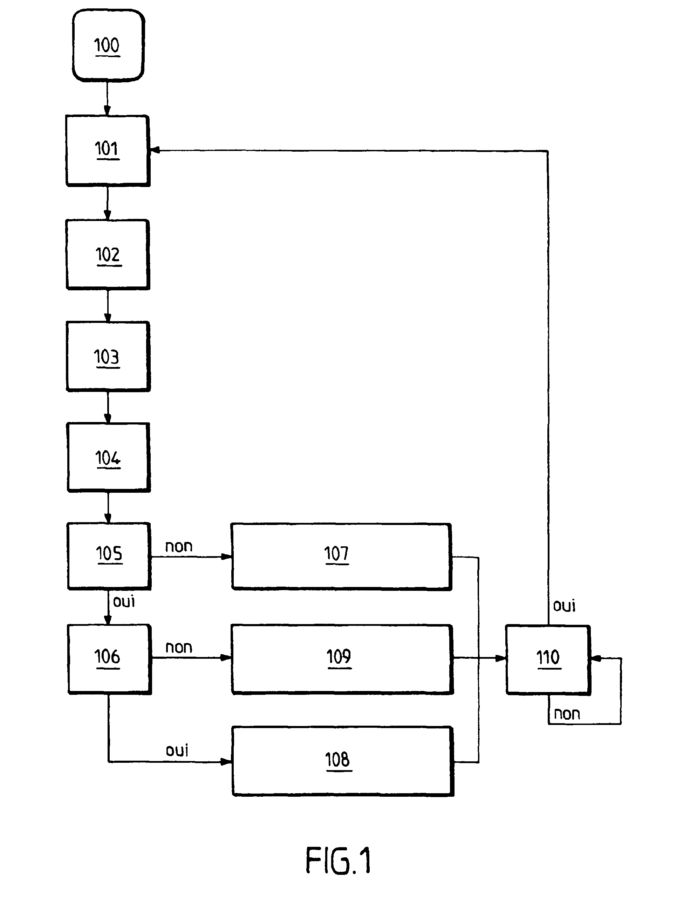

En référence à la figure 1, un procédé de régulation et de chauffage selon l'invention débute par une étape 100 de mise sous tension de l'appareil de chauffage comportant un élément chauffant à inertie et un élément chauffant à action « instantanée ».

A l'étape suivante 101, une valeur de température ambiante est mesurée par la sonde de température ambiante.

A l'étape suivante 102, la valeur de la température de consigne désirée par l'utilisateur est injectée dans un moyen de calcul analogique ou numérique du thermostat électronique.

A l'étape suivante 103, l'écart entre la température ambiante mesurée et la température de consigne souhaitée est déterminé pour un traitement ultérieur.

A l'étape suivante 104, le taux de marche global de l'appareil de chauffage est déterminé en fonction de l'écart déterminé à l'étape 103.

A l'étape suivante 105, un test est effectué pour savoir si le taux de marche global de l'appareil est supérieur à une valeur X prédéterminée.

Si le taux de marche global de l'appareil est supérieur à la valeur X prédéterminée, on passe à l'étape suivante 106.

Si le taux de marche global de l'appareil est inférieur à la valeur X prédéterminée, on passe à l'étape 107.

A l'étape 106, un deuxième test est effectué pour savoir si le taux de marche global de l'appareil est supérieur à une valeur prédéterminée Y.

Si le taux de marche global de l'appareil est supérieur à la valeur prédéterminée Y on passe à l'étape 108.

Si le taux de marche global de l'appareil est inférieur à une valeur prédéterminée Y, on passe à l'étape 109.

A l'étape 107, dans le cas d'un faible taux de marche, on met uniquement en marche l'élément chauffant à action « instantanée » en déterminant son taux de marche pour atteindre une sensation de confort selon le mode de fonctionnement choisi pour l'appareil, et on ne met pas en service l'élément chauffant à inertie en annulant son taux de marche.

A l'étape 109, dans le cas d'un taux de marche intermédiaire, on fixe le taux de marche de l'élément chauffant à action « instantanée » à une valeur A prédéterminée et on fixe de manière progressive le taux de marche de l'élément chauffant à inertie à une valeur déduite du taux de marche global, par exemple en multipliant le taux de marche global par un rapport prédéterminé.

A l'étape 108, dans le cas d'un taux de marche global très important, on met complètement en service l'élément chauffant à inertie en lui affectant un taux de marche maximal de 100 % et on augmente de manière progressive le taux de marche de l'élément chauffant à action « instantanée » en partant de la valeur A prédéterminée jusqu'au taux de marche maximal.

A l'étape 110, on vérifie si l'ensemble des étapes précédentes s'est déroulé dans un intervalle de temps de l'ordre de 40 secondes. Si le temps de cycle de 40 secondes n'est pas atteint, on attend l'écoulement du temps de cycle de 40 secondes.

Si le temps de cycle de 40 secondes est atteint, on repasse à l'étape 101 pour réitérer le procédé selon l'invention.

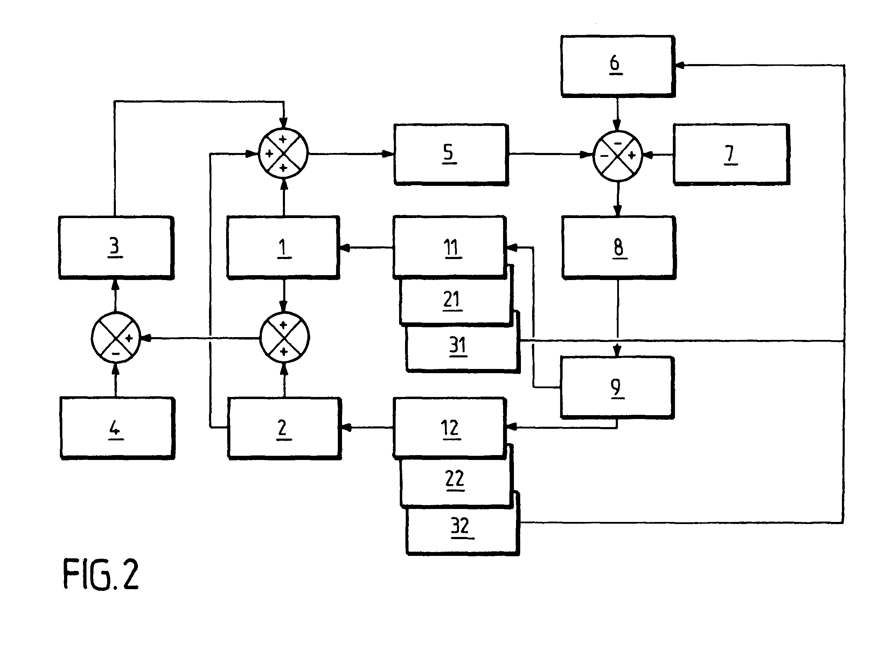

Sur la figure 2, un appareil de chauffage selon l'invention est représenté et comporte un élément chauffant 1 par action « instantanée » et un élément chauffant 2 à inertie.

L'élément chauffant 1 à action « instantanée » peut être un film chauffant appliqué sur la façade de l'appareil de chauffe, tandis que l'élément chauffant 2 à inertie peut être un corps de chauffe en fonte.

Une sonde 3 de température ambiante est prévue dans la pièce à chauffer, et un thermostat électronique gère l'ensemble des actions de l'appareil de chauffage.

Pour la clarté de l'exposé, les éléments chauffants 1 et 2 et les sondes de température sont repérés par les mêmes chiffres de référence que les actions ou signaux qui leur sont assignés par le thermostat électronique et leur sont assimilés.

Un signal 4 de température extérieure provenant d'une sonde 4 de température extérieure s'ajoute à l'influence des corps de chauffe 1 et 2 pour agir sur la température ambiante 3.

L'addition des températures ambiantes et des variations de température provoquées par les corps de chauffe 1 et 2 donne une température 5 résultante mesurée par une sonde 5.

Le signal 5 de température de cette sonde 5 est soustrait de la température de consigne.

Des corrections de sonde sont également soustraites de la température de consigne, avant de déterminer grâce à l'écart ainsi calculé un taux de marche global de l'appareil, cette détermination correspondant à l'étape 104 de la figure 1 du procédé selon l'invention.

La température 5 de sonde, les corrections 6 de sonde et la température 7 de consigne fournissent ainsi un écart permettant de déterminer le taux de marche 8 global de l'appareil.

La comparaison du taux de marche global de l'appareil à des valeurs prédéterminées X et Y, comparaison effectuée aux étapes 105 et 106 du procédé décrit en référence à la figure 1, détermine le passage à une des trois étapes 107, 108, ou 109 du procédé selon l'invention décrit en référence à la figure 1.

Cette détermination s'effectue par sélection interne dans un micro-contrôleur 9 qui calcule et établit le taux de marche actuel 11 de l'élément chauffant à action « instantanée » et le taux de marche 12 de l'élément chauffant à inertie, conformément à une des étapes 107 à 109 décrite en référence à la figure 1.

Le microcontrôleur 9 garde également en mémoire les taux de marche des cycles précédents à savoir les taux de marche 21, 31 et suivants de l'élément chauffant 1 à action « instantanée » et les taux de marche 22, 32, ... de l'élément chauffant 2 à inertie. Cette mémorisation des taux de marche précédents est utilisée pour effectuer une régulation proportionnelle intégrale.

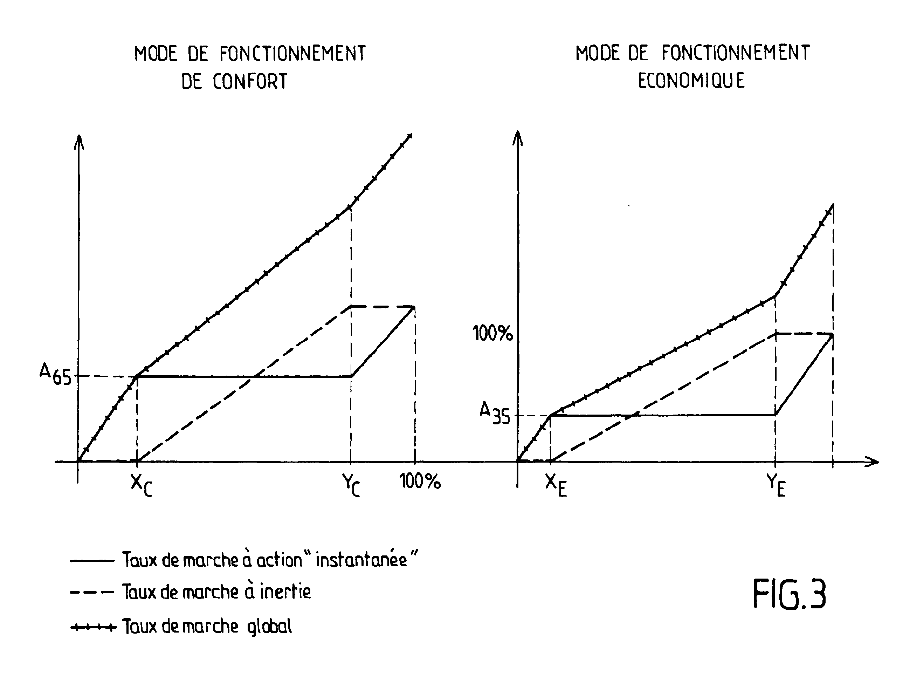

Sur la figure 3, on a représenté un diagramme représentatif du fonctionnement de l'invention et comportant en abscisse le taux de marche global de l'appareil et en ordonnées les taux de marche des éléments chauffants à inertie et à action « instantanée ».

La partie gauche du diagramme représente le fonctionnement en mode dit « de confort », et la partie droite du diagramme représente le fonctionnement en mode dit « économique ».

En partant d'une absence de marche des éléments chauffants 1 et 2 de l'appareil de chauffage, on met tout d'abord en service l'élément chauffant à action « instantanée » jusqu'à une valeur prédéterminée de taux de marche A de l'élément chauffant à action « instantanée ».

A titre d'exemple, cette valeur A de taux de marche est une valeur A₆₅ en mode de confort, voisine de 85 % du taux de marche maximal de l'élément chauffant à action « instantanée ».

Si le taux de marche global recherché de l'appareil n'est pas atteint et si le fonctionnement de l'élément chauffant à action « instantanée » ne permet pas d'atteindre la température désirée de façade voisine de 50°C, on met progressivement en service l'élément chauffant à inertie, tout en maintenant constant à une valeur A le taux de marche de l'élément chauffant à action « instantanée ».

Dans le cas où l'élément chauffant à inertie atteint son taux de marche maximal de 100 % et que les valeurs désirées ne sont pas atteintes, on remet à nouveau progressivement et linéairement en service l'élément chauffant à action « instantanée » jusqu'à atteindre le taux de marche maximal de l'appareil.

Les lois de fonctionnement sont similaires pour le mode de fonctionnement de confort et le mode de fonctionnement économique.

La seule différence entre le mode de fonctionnement de confort et le mode de fonctionnement économique est que la température de façade procurée par l'élément chauffant à action « instantanée », par exemple un film chauffant, est plus faible qu'en mode confort.

En effet, la température de façade recherchée en mode de confort est de l'ordre de 65° et la température de façade recherchée en mode économique est de l'ordre de 35°.

La loi composée ainsi déduite des diagrammes de la figure 3, est traduite en une loi globale de gestion proportionnelle et intégrale des éléments chauffants 1 et 2.

Dans l'exemple représenté, on suppose que la façade de l'appareil de chauffage est relativement isolée et subit très faiblement l'influence de l'élément chauffant à inertie. Dans le cas contraire, si l'élément chauffant à inertie provoquait une augmentation de la température de la façade, il est envisageable de diminuer faiblement le taux de marche de l'élément chauffant à action « instantanée », pour rechercher une température de façade sensiblement constante.

## Revendications

1. Procédé de régulation d'un appareil de chauffage comportant un élément chauffant à action « instantanée » et un élément chauffant à inertie comportant les étapes de mesure (101) de température ambiante, de calcul (103) de l'écart entre la température de consigne et la température ambiante, de détermination (104) d'un taux de marche global de l'appareil de chauffage, **caractérisé par** au moins une étape de comparaison (105 - 106) du taux de marche global à au moins un seuil (X, Y) prédéterminé pour établir, d'une part, un taux de marche de l'élément chauffant à action « instantanée » et, d'autre part, un taux de marche de l'élément chauffant à inertie, pour effectuer une mise en marche uniquement de l'élément chauffant à action « instantanée » lorsque le taux de marche global de l'appareil est inférieur à un premier seuil (X) prédéterminé, et pour effectuer une mise en marche de l'élément chauffant à inertie à un taux de marche maximal et de l'élément chauffant à action « instantanée » à un taux de marche supérieur à une valeur (A) prédéterminée, lorsque le taux de marche global de l'appareil est supérieur à un deuxième seuil (Y) prédéterminé, de manière à établir une sensation de confort en obtenant un rayonnement de façade et une température de façade correspondants sur la façade de l'appareil de chauffage émettant un rayonnement vers l'utilisateur.

2. Procédé selon la revendication 1, **caractérisé par** un taux de marche pratiquement constant (A) de l'élément chauffant à action « instantanée » pour maintenir à une température de confort la façade de l'appareil de chauffage et un taux de marche progressif de l'élément chauffant à inertie, lorsque le taux de marche global de l'appareil est compris entre un premier seuil (X) et un deuxième seuil (Y) prédéterminés.

3. Procédé selon la revendication 1, **caractérisé par** l'établissement d'une correction tenant compte des taux de marche respectifs de l'élément chauffant à action « instantanée » et de l'élément chauffant à inertie pour corriger l'écart calculé entre la température de consigne et la température ambiante.

4. Procédé selon la revendication 3, **caractérisé par le fait que** l'établissement d'une correction dudit écart calculé suit une loi de régulation proportionnelle intégrale.

5. Procédé selon l'une quelconque des revendications 1 à 4, **caractérisé par** l'établissement des taux de marche de chaque élément chauffant est effectué en mode de fonctionnement dit « de confort » et en mode de fonctionnement dit « économique », de manière à maintenir la façade de l'appareil à une température adéquate et confortable pour l'utilisateur dans les deux modes de fonctionnement.

6. Procédé selon la revendication 5, **caractérisé par le fait que** ladite température de façade de l'appareil est voisine de 50°C en mode de fonctionnement dit « de confort » ou voisine de 35°C en mode de fonctionnement dit « économique ».

7. Procédé selon la revendication 6, **caractérisé par** la détermination d'une valeur prédéterminée (A) de taux de marche de l'élément chauffant à action « instantanée » correspondant à ladite température de façade de l'appareil.

8. Appareil de chauffage pour la mise en oeuvre d'un procédé selon l'une quelconque des revendications 1 à 7, comportant un thermostat, un élément chauffant à inertie et un élément chauffant à action « instantanée ».

## Claims

1. Method for regulating a heating device having an "instantaneous"-action heating element and an inertia heating element, comprising the steps of measuring (101) the ambient temperature, calculating (103) the difference between the temperature setting and the ambient temperature, and determining (104) an overall operating rate of the heating device, **characterised by** at least one step of comparing (105-106) the overall operating rate with at least one predetermined threshold (X, Y) to establish, on the one hand, an operating rate of the "instantaneous"-action heating element and, on the other hand, an operating rate of the inertia heating element, in order to actuate only the "instantaneous"-action heating element when the overall operating rate of the device is below a first predetermined threshold (X), and to actuate the inertia heating element at a maximum operating rate and the "instantaneous"-action heating element at an operating rate greater than a predetermined value (A) when the overall operating rate of the device is above a second predetermined threshold (Y), in such a way as to achieve a feeling of comfort by achieving an appropriate wall radiation and wall temperature on the wall of the heating device emitting radiation towards the user.

2. Method according to claim 1, **characterised by** a substantially constant operating rate (A) of the "instantaneous"-action heating element for keeping the wall of the heating device at a comfortable temperature and a progressive operating rate of the inertia heating element when the overall operating rate of the device is between a predetermined first threshold (X) and second threshold (Y).

3. Method according to claim 1, **characterised by** the determination of a correction, taking into account the respective operating rates of the "instantaneous"-action heating element and the inertia heating element, to correct the calculated difference between the temperature setting and the ambient temperature.

4. Method according to claim 3, **characterised in that** the determination of a correction of said calculated difference follows a proportional integral regulation law.

5. Method according to any one of claims 1 to 4, **characterised in that** the determination of the operating rate of each heating element is effected in what is known as a "comfort" operating mode and in what is known as an "economic" operating mode, in such a way as to keep the wall of the device at a temperature which is sufficient and comfortable for the user, in both operating modes.

6. Method according to claim 5, **characterised in that** the wall temperature of the device is approximately 50 °C in what is known as the "comfort" operating mode or approximately 35 °C in what is known as the "economic" operating mode.

7. Method according to claim 6, **characterised by** the determination of a predetermined value (A) of the operating rate of the "instantaneous"-action heating element corresponding to said wall temperature of the device.

8. Heating device for carrying out a method according to any one of claims 1 to 7, comprising a thermostat, an inertia heating element and an "instantaneous"-action heating element.

## Patentansprüche

1. Verfahren zur Regelung eines Heizgerätes, das ein "sofort wirksames" Heizelement und ein träges Heizelement umfaßt, mit den Schritten: Messung (101) der Umgebungstemperatur, Berechnung (103) der Abweichung zwischen der Solltemperatur und der Umgebungstemperatur, Bestimmung (104) einer Gesamtbetriebsrate des Heizgerätes, **gekennzeichnet durch** mindestens einen Schritt (105-106) zum Vergleichen der Gesamtbetriebsrate mit mindestens einem vorbestimmten Schwellenwert (X, Y), um einerseits eine Betriebsrate des "sofort wirksamen" Heizelementes und andererseits eine Betriebsrate des trägen Heizelementes zu bestimmen und damit ausschließlich das "sofort wirksame" Heizelement einzuschalten, wenn die Gesamtbetriebsrate des Gerätes einen vorbestimmten ersten Schwellenwert (X) unterschreitet, und bei maximaler Betriebsrate das träge Heizelement sowie bei einer Betriebsrate, die einen vorbestimmten Wert (A) überschreitet, das "sofort wirksame" Heizelement einzuschalten, wenn die Gesamtbetriebsrate des Gerätes einen zweiten vorbestimmten Schwellenwert (Y) überschreitet, um für ein behagliches Gefühl zu sorgen, indem eine entsprechende Gehäuseabstrahlung und Gehäusetemperatur am zum Benutzer hin abstrahlenden Gehäuse des Heizgerätes erhalten werden.

2. Verfahren nach Anspruch 1, **gekennzeichnet durch** eine praktisch konstante Betriebsrate (A) des "sofort wirksamen" Heizelementes, um das Gehäuse des Heizgerätes bei einer behaglichen Temperatur zu halten und eine progressive Betriebsrate des trägen Heizelementes beizubehalten, wenn die Gesamtbetriebsrate des Heizgerätes im Bereich zwischen einem ersten vorbestimmten Schwellenwert (X) und einem zweiten vorbestimmten Schwellenwert (Y) liegt.

3. Verfahren nach Anspruch 1, **gekennzeichnet durch** die Erzeugung einer Korrektur unter Berücksichtigung der jeweiligen Betriebsraten des "sofort wirksamen" Heizelementes und des trägen Heizelementes, um die berechnete Abweichung zwischen Solltemperatur und Umgebungstemperatur zu korrigieren.

4. Verfahren nach Anspruch 3, **dadurch gekennzeichnet, daß** die Erzeugung einer Korrektur der berechneten Abweichung einem Gesetz der proportionalen, integralen Regelung folgt.

5. Verfahren nach einem der vorhergehenden Ansprüche 1 bis 4, **dadurch gekennzeichnet, daß** die Feststellung der Betriebsrate jedes Heizelementes im sogenannten "Komfort"-Betriebsmodus und im sogenannten "Spar"-Betriebsmodus erfolgt, um das Gehäuse des Gerätes in beiden Betriebsmodi bei einer angemessenen und für den Benutzer behaglichen Temperatur zu halten.

6. Verfahren nach Anspruch 5, **dadurch gekennzeichnet, daß** die Gehäusetemperatur des Gerätes im sogenannten "Komfort"-Betriebsmodus nahe 50°C oder im sogenannten "Spar"-Betriebsmodus nahe 35°C liegt.

7. Verfahren nach Anspruch 6, **gekennzeichnet durch** die Bestimmung eines vorbestimmten Wertes (A) für die Betriebsrate des "sofort wirksamen" Heizelementes, die der Gehäusetemperatur des Gerätes entspricht.

8. Heizgerät zur Durchführung eines Verfahrens nach einem der Ansprüche 1 bis 7, mit einem Thermostat, einem trägen Heizelement und einem "sofort wirksamen" Heizelement.
